(19) **Europäisches Patentamt / European Patent Office / Office européen des brevets**

(11) **EP 1 368 705 B1**

(12) **EUROPEAN PATENT SPECIFICATION**

(45) Date of publication and mention
of the grant of the patent:
**28.01.2015 Bulletin 2015/05**

(51) Int Cl.:
*G03B 21/00* (2006.01)  *H04N 9/74* (2006.01)
*G03B 17/48* (2006.01)  *G03B 21/14* (2006.01)
*G03B 21/26* (2006.01)  *H04N 5/74* (2006.01)
*H04N 7/14* (2006.01)

(21) Application number: **02724957.2**

(22) Date of filing: **14.02.2002**

(86) International application number:
**PCT/US2002/004593**

(87) International publication number:
**WO 2002/067050 (29.08.2002 Gazette 2002/35)**

(54) **INTERACTIVE TELECONFERENCING DISPLAY SYSTEM**

INTERAKTIVES TELEKONFERENZANZEIGESYSTEM

SYSTEME D'AFFICHAGE DE TELECONFERENCE INTERACTIF

(84) Designated Contracting States:
**AT BE CH CY DE DK ES FI FR GB GR IE IT LI LU
MC NL PT SE TR**

(30) Priority: **16.02.2001  US 788026
02.01.2002  US 38229**

(43) Date of publication of application:
**10.12.2003  Bulletin 2003/50**

(73) Proprietor: **Imatte, Inc.
Chatsworth, CA 91311 (US)**

(72) Inventor: **VLAHOS, Paul
Tarzana, CA 91356 (US)**

(74) Representative: **Regimbeau
20, rue de Chazelles
75847 Paris Cedex 17 (FR)**

(56) References cited:
JP-A- 11 196 329    JP-A- 2000 023 123
JP-A- 2000 305 481    US-A- 5 574 511
US-A- 5 764 306    US-A- 5 923 380
US-A- 5 971 544    US-A- 6 002 505
US-B1- 6 198 503

## Description

### Related Applications

This is a continuation-in-part of U.S. application Serial No. 09/788,026 filed February 16, 2001.

### Background of the Invention

Teleconferencing, the use of video and sound to connect two or more locations, permits groups of people at a distant location to see and hear a presenter at another location. A presenter from a remote location will typically be combined with graphics using a split screen technique or dual monitors.

Rear projection, and large liquid crystal display screens, have been used to combine the presenter with graphics. The audience in the same room with the presenter, in front of the rear projection or liquid crystal display, is seeing first generation graphics, but when photographed and transmitted to another location, it must be projected again which makes it second generation. Because of the loss of two generations, the graphic data at the distant location is degraded to a point where many graphs, charts and text cannot be clearly read.

Combining the presenter with the graphics using front projection suffers from the additional problems of blinding the presenter, and distorting the graphics his body intercepts, which is disconcerting to the viewers.

A device to generate a superimposed image from an image of an object and its background image is known from JP 11-196 329.

In teleconferencing, there are numerous variations in the techniques for combining a presenter and the selected graphics. None of these techniques can be considered ideal. The effort to place the presenter in front of the projected graphics is to improve personal contact between a presenter and his audience, as compared to the sleep inducing graphics image with an off-screen presenter.

### Brief Description of the Invention

The Interactive Teleconferencing Display System and is defined by the claims uses equipment performing identical functions at each location thus permitting any location to originate or participate in a conference. The equipment includes a front or rear projection screen, an electronic projector, and a signal processor. When the presenter is in front of a front projection screen, a matte signal is generated that selectively inhibits the projector to prevent the projected graphics from illuminating the presenter. The graphics are downloaded and stored at all locations. The presenter, having been extracted by a matte signal is transmitted to all locations where it is matted over the graphics before projection. By separately transmitting the graphics image and the presenter's image, and combining them at the remote location, each is an original and there is no loss of detail when displayed.

An individual at another location may participate at any time by stepping in front of his screen. All locations will see and hear both the presenter and the additional participant. Both participants may look at each other, point to, and discuss the material being displayed. They may also look toward their local audience without being blinded by the projector. Participants from other locations may join in and also appear on all screens.

### Brief Description of the Figures

Figure 1 illustrates the position of the signal processor unit with respect to the projector when using front projection.

Figure 2 illustrates the functions of the signal processor.

Figure 3, together with Figure 2, illustrates the interconnections between two locations.

Figure 4 shows a block diagram of the components comprising this invention.

Figure 5 is a curve showing the relationship between infrared deviation from that of the screen and the reduction of video signal.

Figure 6 is a logic diagram of the elements of an operational system.

Figure 7 illustrates the functions of the signal processor when using rear projection or liquid crystal display screens.

Figure 8 illustrates the interconnections required for four-location teleconferencing.

Figure 9 illustrates the additional compositing stages required when adding a third and forth location.

**Detailed Description of the Invention**

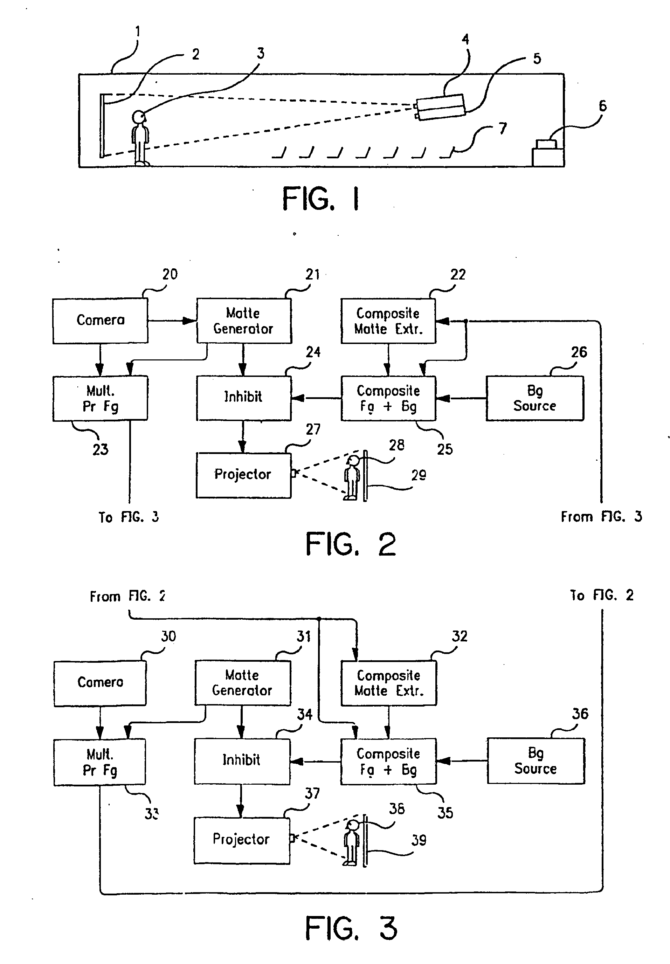

Figure 1, represents a typical conference room 1. Each room contains a screen 2, a participating presenter 3, an electronic projector 4 that is often located above an audience 7, a computer 6 or other storage device (e.g. DVD, VCR, etc.) for storing and retrieving graphics, and a signal processor 5.

The signal processor, contained in a single enclosure, is the key element of this invention in that it includes all elements of the system except the projector, projection screen, and the image storage device. This device is most likely to be a computer, and is placed in an area easily accessible to an operator.

One of the signal processor components is a camera that must be located in close proximity directly below or above the projector, assuming one is using a front projection screen, or it may be integrated into the projector. Users having ample space behind the projection screen may use rear projection. In this event, the ideal camera location is a point over the audience, normal to the screen, and on a common axis through screen center and projector lens. While liquid crystal display screens are still relatively small, they are getting bigger and may become large enough for a large audience. Another possibility is the multiple cathode ray tube display. Its disadvantages are cost and the presence of a join line between tubes. These screens have some advantages over rear projection and front projection screens with few disadvantages other than cost or small size. Although it is expected that most users will use front projection screens, the following system explanations apply to all display methods except where noted.

The camera provides an image of the presenter and anything he adds to the scene, such as material written on a white board. The participants may not always require stored background graphics, and on these occasions, memory 26 will contain a black slide, or will not be used.

Figure 2 and figure 3 represent the display components at locations A and B, distant from each other, but the diagrams of Figures 2 and 3 illustrate the interactions occurring between the components at each location. The numbers 20 through 29 represent the functions of a signal processor. Number series 30 through 39 are the same signal processor functions at a second location.

Referring to figure 2 (location A), a selected graphics image from memory 26 is routed through compositing function 25, through inhibitor function 24, then to projector 27 which projects the selected graphics onto screen 29. The audience at location A will see the stored graphics image from a local memory projected onto the projection screen as an original without loss of detail.

Referring to figure 3 (location B), the same graphics image will be retrieved from computer 36 and routed through compositing function 35, through inhibitor function 34, then to projector 37 that projects the selected graphics onto screen 39. If there is a third and fourth participating location, their audience will also see the same graphics, obtained from their own computer, being projected onto their screens without loss of detail.

As long as there is no presenter in front of any projection screen, the presenter matte extraction function (22,32) has nothing to extract, and compositor (25,35) has no foreground image to composite, and the inhibitor (24,34) has no presenter to protect. When a person or object enters in front of the screen, it becomes a foreground subject and activates the above subject-related functions.

Camera 20 is located directly below projector 27 so as to see presenter 28 and to maintain the proper alignment of the inhibit matte. A beam splitter is provided in camera 20 to split off an infrared or other image for the generation of a matte signal in matte generator 21.

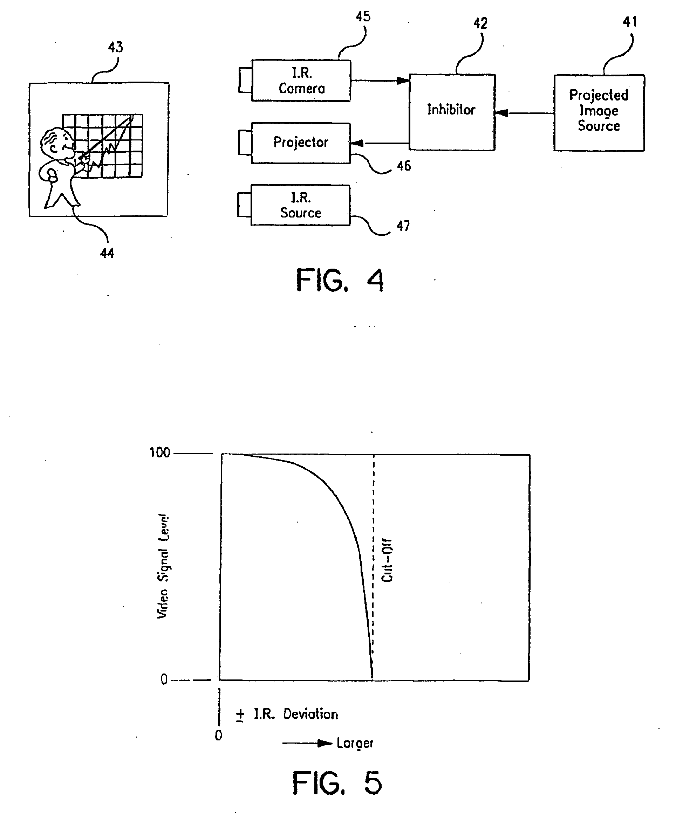

There are several matte generation methods in use. One is described in U.S. application Serial Number 09/788,026 filed February 16, 2001. One such method is described with reference to Figure 4 as follows.

Projected image source 41 of figure 4 represents the source of video image to be projected onto projection screen 43. Image source 41 may be a computer, videocassette, digital videodisc, another camera or other source of video image.

The video program signal from image source 41 is connected to inhibitor 42 where the video signal at selected pixels may be inhibited. The program signal is then connected from inhibitor 42 to video projector 46, which projects the program image on projection screen 43.

In one embodiment, at least one infrared source 47 is used to uniformly illuminate projection screen 43. Being infrared, this illumination is not seen by the viewer. Camera 45 is an infrared sensitive video camera observing the uniformly illuminated projection screen. Camera 45 output is connected to video inhibitor 42. The infrared signal at inhibitor 42 from the projection screen is nulled to zero. In the event a subject 44 enters into the projection beam, the subject's infrared reflection is likely to be higher or lower than the uniform infrared luminance level of the projection screen. Any infrared deviation from the infrared signal level established for the projection screen represents the subject. The addresses of those detected pixels that identify the subject location are used to inhibit the video program signal at these same addresses.

There is always a possibility that some small area on the subject's wardrobe will reflect exactly the same amount of infrared as the screen. In this area, the inhibitor is fooled and the video signal is not inhibited. Such areas are of little concern since there is little probability of infrared reflection from the subject's face matching that of the screen.

The probability of deceiving the inhibit logic is reduced by selecting the infrared camera's pass band least likely to match the reflection levels of the subject.

The near infrared bandwidth is very wide, and the infrared provided by an incandescent source provides a flat wide illumination bandwidth. The infrared sensitive camera may therefore be equipped with filters of adjoining pass bands such as 700-800, 800-900, and 900-1000 nanometers. It takes only a small shift in the pass band to effect a large change in infrared reflection. A filter selection may be made during setup to prevent the subject's infrared reflection from matching that of the screen.

An alternative to selecting external pass band camera filters is to incorporate two or more infrared image channels in the camera, each filtered to a different pass band, with a separate infrared reference frame stored for each pass band.

It is highly unlikely the subject's infrared reflection would simultaneously match the infrared reflection of two or more infrared pass bands.

Options

To inhibit the projected image from falling upon the subject when the subject enters into the projected image, it is necessary to separate the subject from the scene being projected upon it.

There are several existing ways of detecting a subject's location. A standard difference key, or matte, relies on a reference frame of the blank screen to compare with each succeeding frame to detect the subject's location. Since an image within the visible spectrum is also being projected onto the screen, a standard difference key does not appear to function in this application.

Another option is to flood the projection screen with one or more bands of ultra violet light outside visible wavelengths.

One might also separate the subject from the projection screen by using a long wave infrared camera sensitive to the temperature of the human body. Since a camera of this type sees body temperature, there is no need to flood the screen with long wave infrared.

Other methods identify the subject presence by radar or sonar techniques that detect a subject as being at a shorter distance than the screen.

Stereoscopic devices, and maximizing image detail, have been used in automatic cameras to determine distance. Any scheme that provides a signal separating the subject from the projected image may be used in this invention to inhibit the projected image in the area occupied by the subject.

**Preferred Option**

A preferred option is the use of near infrared to illuminate the projection screen. The infrared luminance level of the projection screen may be monitored and the reference frame updated to compensate for line voltage changes to the infrared source. The updated reference frame permits improved subject detection when infrared differences are very small. By using the infrared portion of the radiation spectrum, the projected and detected infrared images are immune from projected image content changes.

Using infrared illumination to generate a difference or ratio matte provides a practical method of identifying those pixels occupied by a subject. Equations for generating suitable ratio and difference mattes for this purpose are as follows:

**Ratio Matte**

If $IRo \leq IRm$
$M = IRo / IRm$
If $IRo > IRm$
$M = IRm / IRo$
If $IRm = IRo = 0$
$M = 0$

**Difference Matte**

$$M = 1 - \{max\ [(IRo - IRm)\ ,\ (IRm - IRo)]\}$$

Where:

IRo = observed IR pixel value
IRm = stored IR pixel value (at the same location)
M = calculated matte value

Inhibiting of the projected image may be continuous, either linear or nonlinear, as opposed to a switch action. If nonlinear, the earliest and smallest detectable variance of the infrared signal is made to cause a small reduction of video signal level. As the deviation increases, the rate of inhibition increases. When the deviation nears a selected level, the inhibition rate is rapidly increased to cutoff, or to a selected low level near cutoff. The variable rate at which signal inhibition occurs prevents the on-off flicker effect of a switch action. Figure 5 illustrates this relationship.

The term "inhibit" is defined as a reduction in the level of the projected image in that area occupied by the subject. In fact, if the level is reduced to about 5% of full level, the visibility of the subject is reduced to visual black. With little or no projector illumination onto the subject, it will receive no illumination other than ambient room light, which is typically attenuated to a very low level when using a projector.

Since subject illumination from the video projector has been inhibited to near zero, RGB levels representing white (or colored) light may be added to those pixels defining the subject area. The illumination of the subject may therefore be increased above that produced by ambient light alone. Although at a lower level, supplementary subject illumination augmenting ambient room light, is likely to be somewhat annoying to the subject facing the projector.

The techniques described in U.S. Patent. No. 5,270,820 may be used to locate the speaker's head (or other extremity). With this additional information, the projected white (or colored) light onto the subject may be inhibited in the region of his head and eyes.

The term "projection screen" or "screen" has been used above. This screen may be white, beaded, metallic, or metallic coated lenticular, or any surface suitable for viewing a projected image.

**Implementation**

In figure 4, image source 41, the video program source may be a computer, videotape, or videodisc as selected by the user.

The video projector 46 and projection surface 43 are commercial devices selected by the user. An infrared filter, if needed, removes any residual infrared in the video projection beam.

The infrared sensitive camera 45 is a video camera whose photoreceptors extend into the near infrared beyond 700 nanometers. A filter is placed over the camera lens to remove visible wavelengths.

At least one infrared source 47 is a projector using an incandescent lamp. A filter is placed over the infrared source to remove visible light. Inhibitor 42 is the detector/inhibitor. Its function has been described earlier.

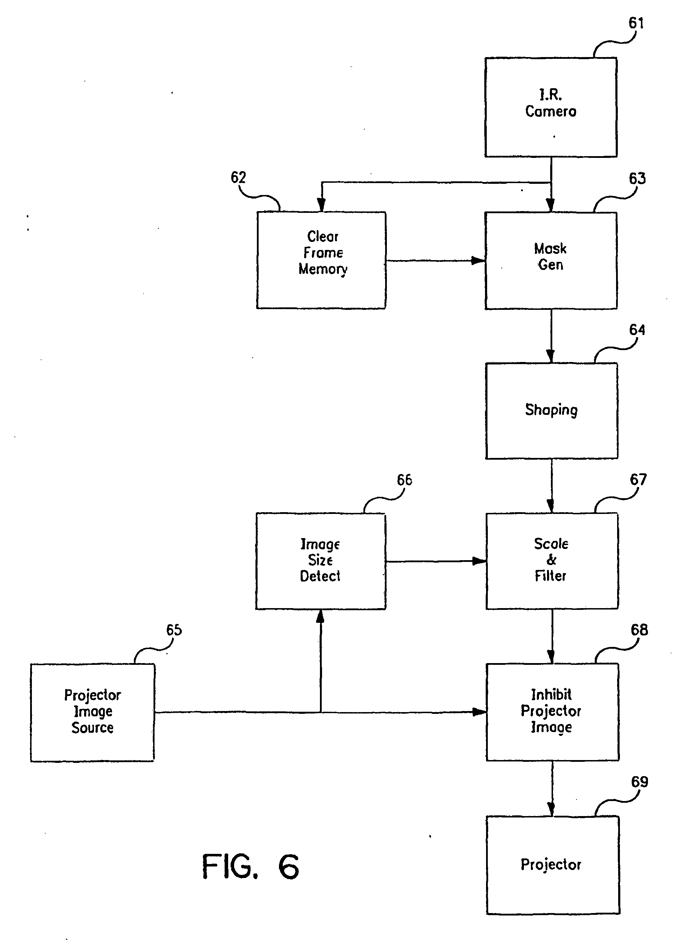

Figure 6 is a logic flow diagram showing the functions of subject detection and program signal inhibiting. Referring to figure 6, IR camera 61 may be a 480 line VGA progressive scan low resolution camera, or any other low resolution camera sensitive to near infrared. Clear frame memory 62 is a stored infrared image of the infrared illuminated screen with the subject removed from the scene. The mask generator 63 compares the infrared sensitive camera image with the clear frame image in memory 62 and any difference identifies that area occupied by a subject, if present. Shaping function 64 shapes the subject detection signal from an on-off signal to a linear, or a nonlinear signal as shown in figure 5.

Projector image source 65 is the program source to be projected onto the projection screen. The program video is generally an image of much higher resolution than an NTSC signal. Image size detect 66 determines the resolution of the program image and connects this size data to scale and filter 67, which acts as a standards converter, to scale the size df the infrared camera to match the size of the projected image. Having matched image sizes, the program image is inhibited in inhibit projector image 68 in the area occupied by a subject, if a subject is present. Projector 99 projects program image onto the screen, but does not project the program onto the subject.

Matte signal 21 is generated by one of such existing methods from information provided by camera 20.

Matte signal generator 21 generates an inhibit matte signal and supplies it to inhibitor 24. The matte signal is assigned a 0.0 value for those pixels that constitute the foreground subject. Pixels in areas of the screen displaying the graphics surrounding the subject are assigned a 1.0. The graphics image 26, passes through compositor 25 to the inhibit multiplier 24. The graphics image is multiplied in 24 by the matte signal from 21 whose zeros in the subject area shut off (inhibit) the projector signal in the area of the subject. At this point the audience at location A (Fig. 2) sees the presenter, illuminated by room light, with the graphics appearing on the screen behind him. The presenter may look at his audience without being blinded by the glare of the projector. The use of a matte signal in generating an inhibit signal is described above. (While the matte signal will be required to isolate the subject, an inhibit signal is not required for a rear projected image or a liquid crystal display.)

The inhibit matte signal from generator 21 is inverted to form a second matte signal providing a 1.0 value for the subject area and a 0.0 value for the background surrounding the subject. This second matte and the video signal from camera 20 are connected to multiplier 23. Their product is the Processed Foreground signal (PrFg) consisting of the subject against a 0.0 field of black. The processed foreground having a subject on a field of 0.0 black is intentional since the blackest black in a video signal sits atop a pedestal of about 7% of white. The 0.0 of the processed foreground video is therefore a matte signal transmitted with the isolated subject. The processed foreground 23 from location A is connected to the matte extraction function 32 and compositing function 35 at location B.

The matte extraction function 32 separates the processed foreground, whose lowest level is the 7% pedestal, from the 0.0 of the black field by setting a detection threshold at about 3%. All pixels above the threshold are in the foreground and are assigned a 1.0 value. All pixels below the selected threshold are in the background and are assigned a 0.0 value. The assignment of pixel values as 1.0 or 0.0 is arbitrary and may be inverted as required by the function it is intended to control. A threshold level above camera and system noise is necessary to prevent background area noise peaks from incorrectly being accepted as a subject pixel.

The extracted matte is inverted to provide a 0.0 in the processed foreground area and a 1.0 in the graphics area surrounding the subject. Multiplying the graphics image from source 36 by 1.0 (the matte signal) retains the full signal level of the graphics surrounding the subject, but the 0.0 in the subject area creates a 0.0 black hole in the projected graphics. Compositing function 35 adds the processed foreground, consisting only of the subject, into the hole created for it. The composite image from 35 is routed through the inhibit function 34 to projector 39. The audience at location B sees the graphics from their own image source 36 being projected onto their own screen with the video image of the presenter from location A composited over their graphics.

The quality of the image is limited only by the resolution of the original image, and the resolution of the projector. By pre-loading the graphics at each location, the remaining data to send to other locations is only the processed video signal, with sound.

The process of using the matte signal to multiply and add to composite an image over a background preserves subject edge transparency. However when the matte signal assigned, is a binary switch (i.e. 1.0 or 0.0), and therefore the composite image may be formed by a key function derived from the matte signal to switch between a stored image and the presenter. In either case the presenter pixel values replace those of the background image to form the composite image.

A binary I/O matte signal generates a sharp edged switch, however the matte edge can be sized to better fit the subject outline, and it may be softened to improve the transition from the presenter to his background.

The inhibit function 34 awaits the presence of a presenter 38. When a person 38 at location B, wishes to participate, he steps in front of his screen. Functions 30, 31 and 34 inhibit pixels in projector 37 from projecting onto the person 38. Functions 30, 31, and 33 generate a processed foreground, PrFg, which is routed back to location A to the matte extractor 22 and compositor 25. The video of person 38 at location B, in front of his screen, will be composited over the graphics being projected at location A. The audience at location B will see participant 38 in person in front of the projected graphics, and presenter 28 will be seen composited over said graphics.

By looking at the screen, both participants will see the other person's video image composited with the graphics. The participants may see and face each other, point to elements in the graphics, and discuss them. The audience at locations C and D will see the presenter A and participant B on their projection screens. A person at C and D may also become a participant by stepping in front of their screen. The audience at the location of a participant will see their presenter in person and all other presenters will appear on the screen behind him, but in front of projected graphics.

There is an obvious limitation to the number of simultaneous participants that can be in the scene and still see the graphics behind them. If the presentation is in the form of a number of speeches, the graphics may be generated to occupy the upper part of the screen so the seated participants will not obscure material that needs to be seen by the audience. Each presenter in turn makes his presentation while the audience at all locations watch the speaker and the reaction of those seated.

If a large white board is used as a projection screen, then the presenter and whatever he writes or draws becomes part of the subject matter and will be projected onto the white boards at the other locations. A participant from another location may draw on his own white board and his writing will be projected on all the other white boards. In this manner each location may contribute to a drawing, add to a list, mark locations on a map, etc.

Rear projection and liquid crystal display systems do not require the inhibit function 24, and is therefore bypassed.

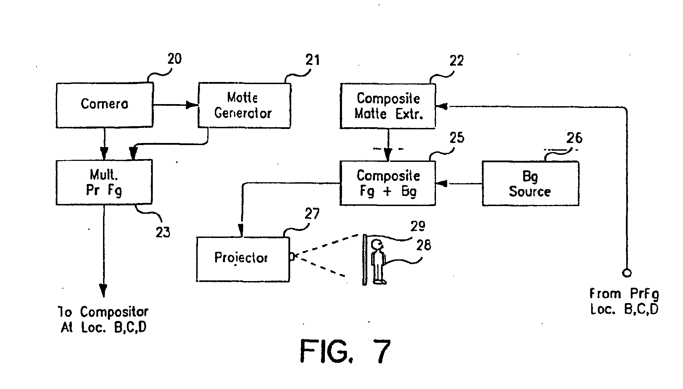

Figure 7 shows the signal flow through a signal processor after the inhibit function is removed or inactivated.

**Interconnecting Multiple Locations**

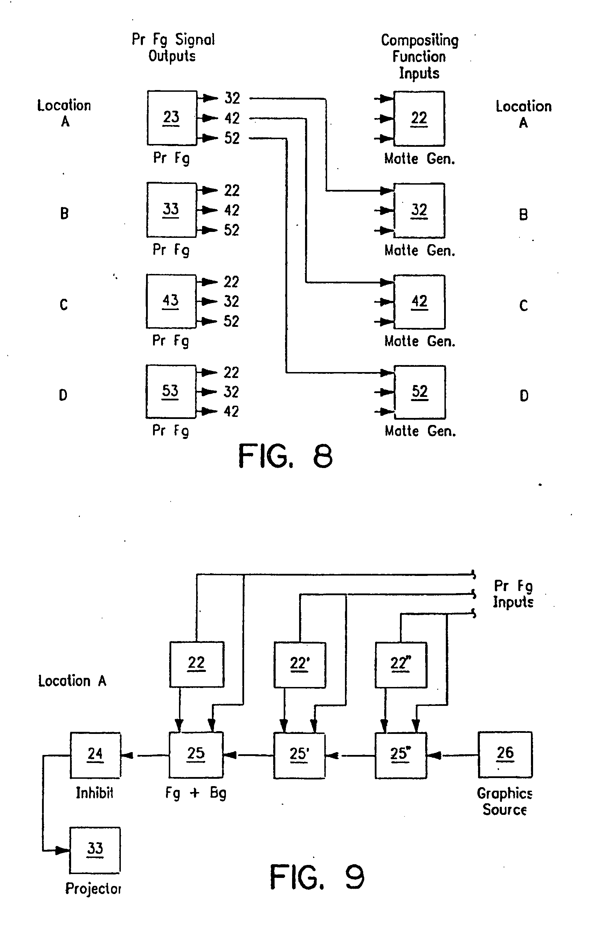

Figure 8 illustrates the interconnections required for four participating locations such as A, B, C and D. The output signal at each of these locations is a Processed Foreground (PrFg) and is connected to the compositing function at all other locations. The input needed by each location is the PrFg signal from all other locations. In figure 8, the PrFg 23 from location A is shown connected to composite functions B, C, and D to illustrate how the PrFg is connected to the input stages at other locations. The remaining connections are made as indicated in figure 8.

Figure 9 illustrates the compositing function needed when there are four participating locations. Functions 22 and 25 are all that are needed if only location B is sending a PrFg signal to location A. The addition of a third location, C, requires a separate compositing stage 22' and 25'. The addition of a fourth location, D, requires a separate compositing stage 22" and 25". The number of compositing stages needed is one less than the number of participating locations.

**Claims**

1.   A method for displaying a composite video image of a presenter in front of a selected background image, **characterised in that** said composite image is displayed at multiple remote locations, without loss of detail in the background image or in the presenter's image, said method comprising the steps of,

   a) storing in a memory at each remote location said selected background image,
   b) generating a matte signal that identifies those pixels in the video image representing said presenter,
   c) transmitting to each remote location the signal levels of pixels including said presenter,
   d) generating a composite video image of said presenter and said stored selected background image by replacing pixel levels in the background image, at corresponding addresses, with pixel levels of said presenter's image,
   e) displaying said composite video image.

2.   The method of claim 1 wherein said image storage memory, for storing and retrieving an image, includes a computer, DVD, VCR, or other image storage and retrieval device.

3.   The method of claim 1 wherein said stored selected background image includes at least one of graphics, charts, tables and photographs.

4.   The method of Claim 1 wherein the selected background image is downloaded to remote locations at the time of its selection.

5.   The method of claim 1 wherein the video image of a presenter, transmitted to remote locations, includes said presenter on a field of black at a signal level of 0.0.

6.   The method of claim 5 wherein those pixels whose signal level exceeds a set threshold above zero, identify the presenter's video signal.

7.   The method of claim 1 wherein the selected background image is stored at remote locations in advance of a teleconference.

8.   The method of claim 1 wherein said composite video image may be viewed on at least one of a front projection screen, a rear projection screen, a self luminous liquid crystal display and a cathode ray tube display.

9.   The method of claim 8 in which said composite video image viewed on said front projection screen, employs an electronic projector.

10.  The method of claim 9 in which said electronic projector is inhibited in said presenter area to prevent said presenter from being illuminated by said projected image.

11.  The method of claim 1 in which a person in at least one remote location may become a participant and be seen on the projection screen at all other locations, by stepping in front of the participant's own projection screen.

12. The method of claim 11 in which persons in at least two locations may become participants at the same time and may be seen on the projection screen at all other locations, by each participant stepping in front of the projection screen at each participant's own location.

13. A signal processing apparatus for displaying a composite video image of a presenter in front of a selected background **characterised in that** said composite image is displayed, at multiple locations without loss of detail in the background image or in the presenters image said apparatus, comprising:

a) means for storing said selected background image in a memory (26) at each remote location,
b) means for generating a matte signal (21) that identifies those pixels in the video image that include the presenter's video signal,
c) means for transmitting to each remote location the signal levels (23) of pixels comprising said presenter,
d) means for compositing (22,25) said presenter over said selected background by replacing pixels levels in the background image, at corresponding addresses with pixels levels of said presenters image, at each remote location, and
e) means for displaying (27,29) said composite image.

14. The apparatus of claim 13 wherein said means for storing a selected background image includes one of a computer, DVD, VCR, or other image storage device.

15. The apparatus of claim 13 wherein said means for compositing said presenter over said background comprises compositing hardware or software under control of said matte signal.

16. The apparatus of claim 13 wherein said display means includes at least one of a commercial electronic projector and a projection screen, a CRT display, and a liquid crystal display.

17. The apparatus of claim 16 wherein said projection screen is capable of reflecting infrared illumination.

18. The apparatus of claim 13 wherein said apparatus is capable of performing identical functions at all locations.

**Patentansprüche**

1. Verfahren zum Anzeigen eines zusammengesetzten Videobilds eines Präsentators vor einem ausgewählten Hintergrundbild, **dadurch gekennzeichnet, dass** das genannte zusammengesetzte Bild an mehreren entfernten Orten ohne Verlust von Details im Hintergrundbild oder im Präsentatorbild angezeigt wird, wobei das Verfahren folgende Schritte umfasst:

a) Abspeichern des ausgewählten Hintergrundbilds in einem Speicher an jedem entfernten Ort,
b) Erzeugen eines Ausblendmattensignals, das diejenigen Pixel im Videobild identifiziert, die den Präsentator darstellen,
c) Übermitteln der Signalniveaus von Pixeln, die den Präsentator enthalten, an jeden entfernten Ort,
d) Erzeugen eines zusammengesetzten Videobilds des Präsentators und des gespeicherten Hintergrundbilds, indem Pixelniveaus im Hintergrundbild an entsprechenden Adressen durch Pixelniveaus des Präsentatorbilds ersetzt werden,
e) Anzeigen des zusammengesetzten Videobilds.

2. Verfahren nach Anspruch 1, wobei der genannte Bildabspeicherungsspeicher zum Abspeichern und Abrufen eines Bilds einen Computer, DVD, VCR oder ein anderes Gerät zum Bildabspeichern und Bildabrufen umfasst.

3. Verfahren nach Anspruch 1, wobei das gespeicherte ausgewählte Hintergrundbild mindestens eines der folgenden Elemente umfasst: Graphiken, Diagrammen, Tabellen und Fotografien.

4. Verfahren nach Anspruch 1, wobei das ausgewählte Hintergrundbild an entfernte Orte zur Zeit seines Auswählens heruntergeladen wird.

5. Verfahren nach Anspruch 1, wobei das Videobild eines Präsentators, das an entfernte Orte übermittelt wurde, den Präsentator auf einem Schwarzfeld bei einem Signalniveau von 0.0 enthält.

**6.** Verfahren nach Anspruch 5, wobei diejenigen Pixel, deren Signalniveau einen gesetzten Schwellenwert oberhalb von Null übersteigt, das Videosignal des Präsentators identifizieren.

**7.** Verfahren nach Anspruch 1, wobei das ausgewählte Hintergrundbild an entfernten Orten im Vorfeld einer Telekonferenz abgespeichert wird.

**8.** Verfahren nach Anspruch 1, wobei das zusammengesetzte Videobild auf mindestens einem der folgenden Elemente angesehen werden kann: einem Frontalprojektionsbildschirm, einem Rückprojektionsbildschirm, einer selbstleuchtenden Flüssigkristallanzeige und einer Kathodenstrahlröhrenanzeige.

**9.** Verfahren nach Anspruch 8, bei dem das zusammengesetzte Videobild, das auf dem Frontalprojektionsbildschirm angesehen wird, einen elektronischen Projektor einsetzt.

**10.** Verfahren nach Anspruch 9, bei dem der elektronische Projektor im Bereich des Präsentators unterdrückt ist, um zu verhindern, dass der Präsentator vom genannten projizierten Bild beleuchtet wird.

**11.** Verfahren nach Anspruch 1, bei dem eine Person an mindestens einem entfernten Ort ein Teilnehmer werden und auf dem Projektionsbildschirm an allen anderen Orten gesehen werden kann, indem sie vor den eigenen Projektionsbildschirm des Teilnehmers tritt.

**12.** Verfahren nach Anspruch 11, bei dem Personen an mindestens zwei Orten zur gleichen Zeit Teilnehmer werden und auf dem Projektionsbildschirm an allen anderen Orten gesehen werden können, indem jeder Teilnehmer vor den Projektionsbildschirm am eigenen Ort des jeden Teilnehmers tritt.

**13.** Signalverarbeitungsvorrichtung zum Anzeigen eines zusammengesetzten Videobilds eines Präsentators vor einem ausgewählten Hintergrund, **dadurch gekennzeichnet, dass** das genannte zusammengesetzte Bild an mehreren Orten ohne Verlust von Details im Hintergrundbild oder im Präsentatorbild angezeigt wird, die genannte Vorrichtung umfassend:

a) Mittel zum Abspeichern des genannten ausgewählten Hintergrundbilds in einem Speicher (26) an jedem entfernten Ort,
b) Mittel zum Erzeugen eines Ausblendmattensignals (21), das diejenigen Pixel im Videobild identifiziert, die das Videosignal des Präsentators enthalten,
c) Mittel zum Übermitteln der Signalniveaus (23) von Pixeln, die den Präsentator enthalten, an jeden entfernten Ort,
d) Mittel zum Einfügen (22, 25) des Präsentators über dem ausgewählten Hintergrund, indem Pixelniveaus im Hintergrundbild an entsprechenden Adressen durch Pixelniveaus des Präsentatorbilds an jedem entfernten Ort ersetzt werden, und
e) Mittel zum Anzeigen (27, 29) des genannten zusammengesetzten Bilds.

**14.** Vorrichtung nach Anspruch 13, wobei die Mittel zum Abspeichern eines ausgewählten Hintergrundbilds eines der folgenden Elemente umfassen: einen Computer, DVD, VCR oder ein anderes Gerät zum Bildabspeichern.

**15.** Vorrichtung nach Anspruch 13, wobei die Mittel zum Einfügen des Präsentators über dem Hintergrund einfügende Hardware oder Software, die einer Steuerung des Ausblendmattensignals unterstehen, umfassen.

**16.** Vorrichtung nach Anspruch 13, wobei die Mittel zum Anzeigen mindestens eines der folgenden Elemente umfassen: einen handelsüblichen elektronischen Projektor und einen Projektionsbildschirm, eine CRT-Anzeige und eine Flüssigkristallanzeige.

**17.** Vorrichtung nach Anspruch 16, wobei der Projektionsbildschirm zum Reflektieren einer Infrarotbeleuchtung geeignet ist.

**18.** Vorrichtung nach Anspruch 13, wobei die Vorrichtung zum Ausführen identischer Funktionen an allen Orten geeignet ist.

**EP 1 368 705 B1**

**Revendications**

1. Procédé pour afficher une image vidéo composite d'un présentateur devant une image d'arrière-plan sélectionnée, **caractérisé en ce que** ladite image composite est affichée à de multiples emplacements distants, sans perte de détail dans l'image d'arrière-plan ou dans l'image du présentateur, ledit procédé comprenant les étapes consistant à :

   a) stocker dans une mémoire à chaque emplacement distant ladite image d'arrière-plan sélectionnée,
   b) générer un signal de cache qui identifie ces pixels dans l'image vidéo représentant ledit présentateur,
   c) transmettre à chaque emplacement distant les niveaux de signal de pixels comprenant ledit présentateur,
   d) générer une image vidéo composite dudit présentateur et ladite image d'arrière-plan sélectionnée stockée en remplaçant des niveaux de pixel dans l'image d'arrière-plan, à des adresses correspondantes, par des niveaux de pixel de ladite image dudit présentateur,
   e) afficher ladite image vidéo composite.

2. Procédé selon la revendication 1, dans lequel ladite mémoire de stockage d'image, pour stocker et récupérer une image, comprend un ordinateur, un DVD, un magnétoscope, ou autre dispositif de stockage et de récupération d'image.

3. Procédé selon la revendication 1, dans lequel ladite image d'arrière-plan sélectionnée stockée comprend au moins un parmi des graphiques, des diagrammes, des tableaux et des photographies.

4. Procédé selon la revendication 1, dans lequel l'image d'arrière-plan sélectionnée est téléchargée vers des emplacements distants au moment de sa sélection.

5. Procédé selon la revendication 1, dans lequel l'image vidéo d'un présentateur, transmise à des emplacements distants, comprend ledit présentateur sur un champ de noir à un niveau de signal de 0,0.

6. Procédé selon la revendication 5, dans lequel ces pixels dont le niveau de signal dépasse un seuil fixé au-dessus de zéro, identifient le signal vidéo du présentateur.

7. Procédé selon la revendication 1, dans lequel l'image d'arrière-plan sélectionnée est stockée à des emplacements distants avant une téléconférence.

8. Procédé selon la revendication 1, dans lequel ladite image vidéo composite peut être visualisée sur au moins un d'un écran de projection frontale, d'un écran de projection arrière, d'un afficheur à cristaux liquides autolumineux et d'un afficheur à tube cathodique.

9. Procédé selon la revendication 8, dans lequel ladite image vidéo composite visualisée sur ledit écran de projection frontale, emploie un projecteur électronique.

10. Procédé selon la revendication 9, dans lequel ledit projecteur électronique est bloqué dans ladite zone de présentateur pour empêcher ledit présentateur d'être éclairé par ladite image projetée.

11. Procédé selon la revendication 1, dans lequel une personne dans au moins un emplacement distant peut devenir un participant et être vue sur l'écran de projection à tous les autres emplacements, en faisant un pas devant le propre écran de projection du participant.

12. Procédé de la revendication 11, dans lequel des personnes dans au moins deux emplacements peuvent devenir participants en même temps et peuvent être vues sur l'écran de projection à tous les autres emplacements, par chaque participant faisant un pas devant l'écran de projection au propre emplacement de chaque participant.

13. Appareil de traitement de signal pour afficher une image vidéo composite d'un présentateur devant un arrière-plan sélectionné, **caractérisé en ce que** ladite image composite est affichée, à de multiples emplacements sans perte de détail dans l'image d'arrière-plan ou dans l'image du présentateur, ledit appareil comprenant :

   a) des moyens pour stocker ladite image d'arrière-plan sélectionnée dans une mémoire (26) à chaque emplacement distant,
   b) des moyens pour générer un signal de cache (21) qui identifie ces pixels dans l'image vidéo qui comprennent le signal vidéo du présentateur,

c) des moyens pour transmettre à chaque emplacement distant les niveaux de signal (23) de pixels comprenant ledit présentateur,

d) des moyens pour effectuer la composition (22, 25) dudit présentateur sur ledit arrière-plan sélectionné en remplaçant des niveaux de pixels dans l'image d'arrière-plan, à des adresses correspondantes, par des niveaux de pixels de ladite image dudit présentateur, à chaque emplacement distant, et

e) des moyens pour afficher (27, 29) ladite image composite.

**14.** Appareil selon la revendication 13, dans lequel lesdits moyens pour stocker une image d'arrière-plan sélectionnée comprennent un parmi un ordinateur, un DVD, un magnétoscope, ou autre dispositif de stockage d'image.

**15.** Appareil selon la revendication 13, dans lequel lesdits moyens pour effectuer la composition dudit présentateur sur ledit arrière-plan comprennent un matériel ou un logiciel de composition sous la commande dudit signal de cache.

**16.** Appareil selon la revendication 13, dans lequel lesdits moyens d'affichage comprennent au moins un d'un projecteur électronique du commerce et d'un écran de projection, d'un afficheur CRT, et d'un afficheur à cristaux liquides.

**17.** Appareil selon la revendication 16, dans lequel ledit écran de projection est capable de réfléchir un éclairage infrarouge.

**18.** Appareil selon la revendication 13, dans lequel ledit appareil est capable d'effectuer des fonctions identiques à tous les emplacements.

FIG. 1

To FIG. 3

From FIG. 3

FIG. 2

From FIG. 2

To FIG. 2

FIG. 3

43

45

42

41

I.R.
Camera

Inhibitor

Projected
Image
Source

44

Projector

46

I.R.
Source

47

# FIG. 4

100

Video Signal Level

Cut-Off

0

± I.R. Deviation

0

Larger

# FIG. 5

FIG. 6

FIG. 7

Pr Fg Signal
Outputs

Compositing
Function
Inputs

Location
A

32
[23] Pr Fg
42
52

[22] Matte Gen.

Location
A

B

22
[33] Pr Fg
42
52

[32] Matte Gen.

B

C

22
[43] Pr Fg
32
52

[42] Matte Gen.

C

D

22
[53] Pr Fg
32
42

[52] Matte Gen.

D

FIG. 8

Pr Fg
Inputs

Location A

[22]    [22']    [22"]

[24]    [25]    [25']    [25"]    [26]
Inhibit  Fg + Bg                      Graphics
                                      Source

[33]
Projector

FIG. 9

**EP 1 368 705 B1**

**REFERENCES CITED IN THE DESCRIPTION**

**Patent documents cited in the description**

- US 78802601 A
- JP 11196329 A
- US 5270820 A